# EUROPEAN PATENT SPECIFICATION

(11) **EP 2 169 247 B1**
(45) Date of publication and mention of the grant of the patent: **01.01.2014**
(21) Application number: 09252203.6
(22) Date of filing: 16.09.2009
(51) Int. Cl.: F16D 13/56

(54) **Multiple disc clutch**
Kupplung mit mehreren Scheiben
Embrayage à disques multiples

(30) Priority: 30.09.2008 JP 2008255101
(43) Date of publication of application: 31.03.2010
(73) Proprietor: Honda Motor Co., Ltd., Minato-ku Tokyo 107-8556 (JP)
(72) Inventor: Gokan, Yoshitsugu, Wako-shi Saitama 351-0193 (JP); Kawatsu, Hirotaka, Wako-shi Saitama 351-0193 (JP)
(74) Representative: Stevens, Jason Paul

(56) References cited:
- JP-A- 1 283 439
- JP-A- 8 232 981
- JP-A- 60 184 721

## Description

The present invention relates to a multiple disc clutch provided with a clutch outer coupled to an input member, plural driving friction plates fitted to the clutch outer so as to rotate with it, plural driven friction plates arranged alternately with the driving friction plates, a pressing member which rotates together with the output shaft and is axially movable so as to compress the driving friction plates and the driven friction plates, a clutch spring that axially presses the pressing member, a clutch lifter that can be moved in an opposite direction to a direction in which the pressing member is pressed by the clutch spring and which is arranged coaxially with the pressing member, and a lifter plate that is held by the periphery of the clutch lifter via a clutch bearing and which moves the pressing member in the opposite direction to the direction in which the pressing member is pressed by the clutch spring according to the axial movement of the clutch lifter.

A multiple disc clutch in which a clutch lifter is integrally provided with a shank and a flange projecting radially outwardly from an intermediate part of the shank is already known from JP-A No. S59-212533.

In the multiple disc clutch disclosed in JP-A No. S59-212533, as the shank and the flange are formed integrally to form the clutch lifter, the shape of the flange must be changed depending on the size of the clutch bearing. Thus, a dedicated clutch lifter must be prepared for every clutch bearing of different size, and the cost is increased.

An alternative form of multiple disc clutch is disclosed in JP 8-232981, on which the preamble of claim 1 is based.

The present invention is made in view of such a situation and it is an object of at least the preferred embodiment to provide a multiple disc clutch where it is not necessary to prepare a dedicated clutch lifter for every differently-sized clutch bearing, so that the cost is reduced, and also a multiple disc clutch which can be reduced in size in comparison to known multiple disc clutches.

To achieve the object, according to a first aspect of the present invention there is provided a multiple disc clutch comprising: a clutch outer coupled to an input member; a plurality of driving friction plates fitted to the clutch outer so that they cannot rotate relative thereto; a plurality of driven friction plates arranged alternately with the driving friction plates; a pressing member which rotates together with an output shaft and which is movable in an axial direction to compress the driving friction plates and the driven friction plates; a clutch spring that axially presses the pressing member; a clutch lifter that can be moved in an opposite direction to a direction in which the pressing member is pressed by the clutch spring and which is arranged coaxially with the pressing member: and a lifter plate that is held by the periphery of the clutch lifter via a clutch bearing and which moves the pressing member in the opposite direction to the direction in which the pressing member is pressed by the clutch spring according to axial movement of the clutch lifter, wherein the clutch lifter is formed from: a lifter pin which is coaxial with the pressing member; and a dished holding member formed as a separate member from the lifter pin and attached to an intermediate part of the lifter pin; and wherein the clutch spring is arranged axially inside the clutch bearing which is provided between the holding member and the lifter plate, and outside a nut screwed to the output shaft so as to fix an inner member to the output shaft; characterized in that the clutch bearing is arranged outside the nut, with a part of the clutch bearing overlapped with the nut in a side view.

As the clutch lifter is formed from the lifter pin and the dished holding member which is formed as a separate member from the lifter pin and attached to the intermediate part of the lifter pin, only the shape of the holding member needs to be changed when the size of the clutch bearing is changed. The lifter pin can be unchanged, and the cost of the clutch lifter can be reduced. Further, the clutch spring is arranged effectively utilizing the space around the nut, and the size of the multiple disc clutch can be reduced.

In addition, as the clutch bearing is arranged outside the nut with a part of the clutch bearing overlapped with the nut in the side view, it can contribute to the axial compactness of the multiple disc clutch.

In a preferred form, a dislocation preventing member is installed on the pressing member and is in contact with the periphery of the lifter plate.

With this arrangement, the pressing member and the lifter plate can be easily assembled, even though they are separate members. Further, the axial movement of the lifter plate can be transmitted to the pressing member with a simple structure.

Preferably, the clutch spring is arranged radially within the pressing member, and the lifter plate and the holding member are arranged outside the clutch spring in the direction along an axis of the output shaft.

Thus, the clutch spring can be covered and protected with the pressing member, the lifter plate and the holding member, oil is prevented from being splashed on the clutch spring, and a drag (ie resistance to motion) of the clutch spring can be prevented, or at least reduced.

A main shaft 11 in an embodiment corresponds to the output shaft in the present invention, a primary driven gear 16 in the embodiment corresponds to the input member in the present invention, a clutch inner 18 in the embodiment corresponds to the pressing member in the present invention, a centre cam 22 in the embodiment corresponds to the inner member in the present invention, and a snap ring 60 in the embodiment corresponds to the dislocation preventing member in the present invention.

A preferred embodiment of the invention will now be described by way of example only and with reference to the accompanying drawings, in which:
Fig. 1 is a sectional view showing a multiple disc clutch;
Fig. 2 is an exploded perspective view showing a centre cam, an assist cam, a slipper cam, a coned disc spring, a pressure plate and a fixing holder;
Fig. 3 is a development sectional view showing an assist cam mechanism and a back torque limiter mechanism respectively;
Fig. 4 is a sectional view taken along line 4-4 in Fig. 1; and
Fig. 5 is a sectional view taken along line 5-5 in Fig. 4.

Referring to the attached drawings, an embodiment of the present invention will be described below, whereby the feature of the characterising part of claim 1, that a part of the clutch bearing overlaps with the nut in a side view, is not shown in the drawings.

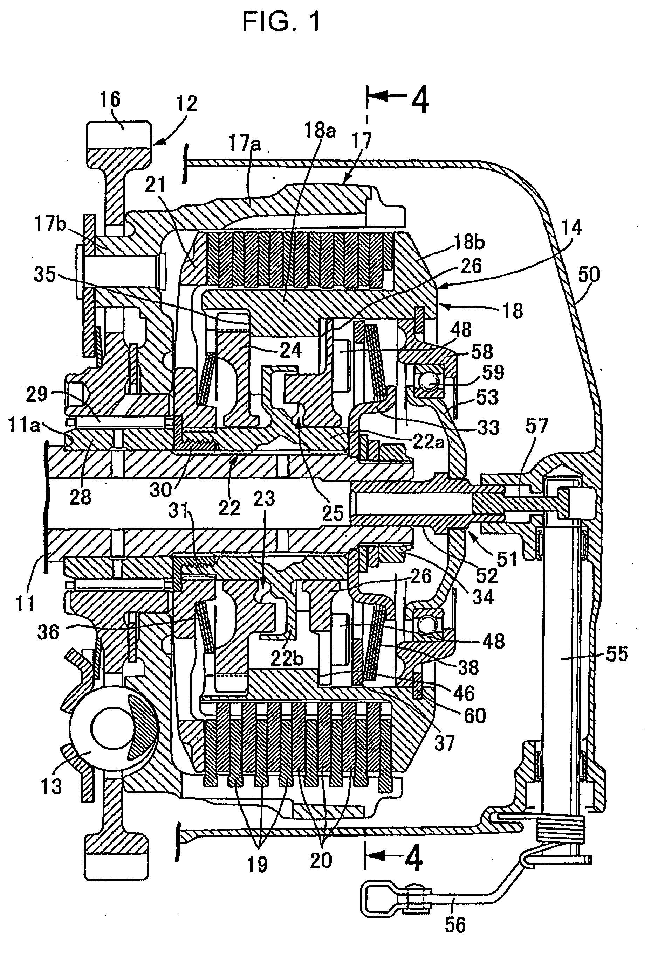

First, with reference to Fig. 1, a primary reduction gear 12, a damping spring 13 and a multiple disc clutch 14 are provided between a crankshaft (not shown) of an engine (for example a motorcycle engine) and a main shaft 11 of a gear shift unit (not shown). The primary reduction gear 12 is formed from a primary driving gear (not shown) provided on the crankshaft, and a primary driven gear 16 which is engaged with the primary driving gear. The primary driven gear 16 is rotatably supported on the main shaft 11.

The multiple disc clutch 14 is provided with: a clutch outer 17 coupled to the primary driven gear 16, which serves as an input member, via the damping spring 13; a clutch inner 18 having a cylindrical part 18a coaxially arranged inside the clutch outer 17 and a pressurizing plate part 18b integrally formed with one end of the cylindrical part 18a; plural driving friction plates 19 fitted to the clutch outer 17 so that the driving friction plates cannot rotate relative to the clutch outer 17; plural driven friction plates 20 arranged alternately with the driving friction plates 19 and fitted to the cylindrical part 18a of the clutch inner 18 so that the driven friction plates cannot rotate relative to the clutch inner 18; a pressure plate 21 which is fixed to the main shaft 11, with the alternately overlapped driving friction plates 19 and driven friction plates 20 being sandwiched between the pressure plate 21 and the pressurizing plate part 18b; a centre cam 22 having a disc part 22b arranged in a plane perpendicular to an axis of the main shaft 11, arranged radially inside the cylindrical part 18a and fixed to the main shaft 11; an assist cam plate 24 facing one surface of the disc part 22b, which assist cam plate 24 cannot rotate relative to the clutch inner 18; and a slipper cam plate 26 fixed to the clutch inner 18 and facing the other surface of the disc part 22b.

The clutch outer 17 is integrally formed from a cylindrical part 17a coaxially enclosing the cylindrical part 18a of the clutch inner 18, and an end wall part 17b which is connected to the end of the cylindrical part 17a nearer the primary driven gear 16, and which is formed in the shape of a bowl open on the side opposite to the primary driven gear 16. Peripheral parts of the plural driving friction plates 19 are fitted to the cylindrical part 17a so that the peripheral parts can be moved axially and cannot rotate relative to the cylindrical part 17a.

The clutch inner 18 is formed from the cylindrical part 18a and the integral pressurizing plate part 18b, which projects radially from one end of the cylindrical part 18a.

An annular stage 11a opposite to the side of the multiple disc clutch 14 is formed on the periphery of the main shaft 11 at a part corresponding to the primary reduction gear 12. A cylindrical sleeve 28 is fitted around the main shaft 11 on the side opposite to the multiple disc clutch 14, and one end of the sleeve 28 is in contact with the annular stage 11a. A needle bearing 29 is inserted between the periphery of the sleeve 28 and an inner circumference of the primary driven gear 16.

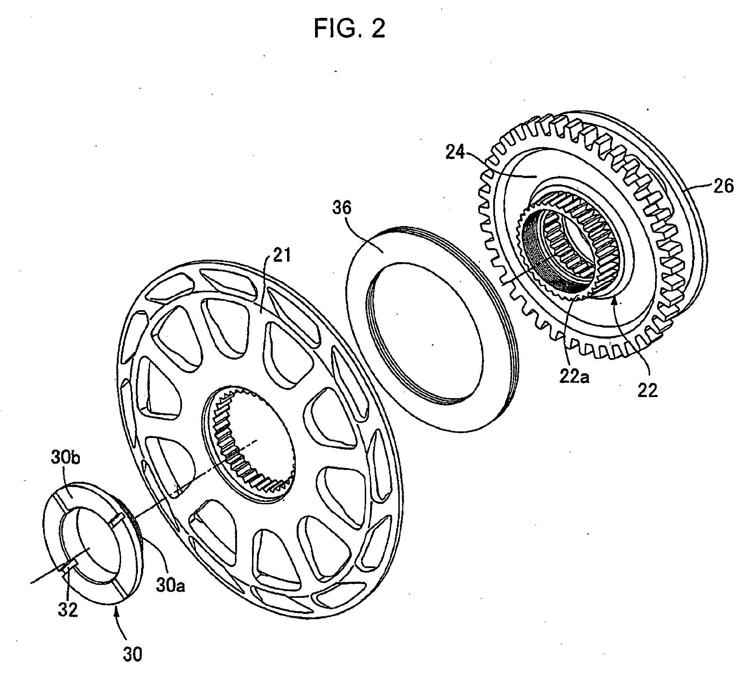

Also referring to Fig. 2, the centre cam 22 is integrally provided with a cylindrical boss 22a which is fitted to the periphery of the main shaft 11 via splines. The disc part 22b (see Fig. 1) projects radially outwardly from an axially intermediate part of the boss 22a, and is arranged in the plane perpendicular to the axial direction of the main shaft 11. The pressure plate 21 is formed in the shape of a disc, and a fixing holder 30 that detachably fixes the pressure plate 21 to the boss 22a is detachably attached to the boss 22a.

The fixing holder 30 is screwed to the boss 22a. A stage 31 is provided on the periphery of the boss 22a between an inner circumference of the pressure plate 21 and the holder, and the inner circumference of the pressure plate 21 is fitted to the periphery of the boss 22a via splines.

The fixing holder 30 is integrally formed from a cylindrical threaded shank 30a screwed to the end of the boss 22a nearer the sleeve 28, and a flange 30b which projects radially outwardly of the boss 22a and which is connected to an outer end of the threaded shank 30a. The inner circumference of the pressure plate 21 is held between the stage 31 of the boss 22a and the flange 30b.

In addition, a cross-shaped fitting groove 32 (for example, for fitting a turning tool) is provided on an outer end face of the fixing holder 30 (an outer end face of the flange 30b in this embodiment).

A nut 34 is screwed to one end of the main shaft 11, and an annular spring retainer 33 is clamped between the nut and one end of the boss 22a of the centre cam 22. The flange 30b of the fixing holder 30, the boss 22a of the centre cam 22 and the spring retainer 33 are held between the annular stage 11a and the nut 34 by tightening the nut 34, and the boss 22a is fitted to the periphery of the main shaft 11 via splines. Thus, the centre cam 22 and the pressure plate 21 are fixed to the main shaft 11.

The assist cam plate 24 configures an assist cam mechanism 23 that moves the clutch inner 18 so that the pressurizing plate part 18b is brought closer to the pressure plate 21 when there is an increase of driving force input from the primary driven gear 16 in collaboration with the centre cam 22. In addition, the slipper cam plate 26 configures a back torque limiter mechanism 25 that moves the clutch inner 18 so that the pressurizing plate part 18b is moved away from the pressure plate 21 when there is an increase of back torque from the main shaft 11 in collaboration with the centre cam 22.

The periphery of the assist cam plate 24 is supported by the boss 22a of the centre cam 22 so that it can move in the axial direction, and is fitted to the inner circumference of the cylindrical part 18a of the clutch inner 18 via splines. An annular regulating stage 35 that regulates the movement of the assist cam plate 24 towards the disc part 22b is formed on the inner circumference of the cylindrical part 18a so that the regulating stage can be touched to the periphery of the assist cam plate 24. The periphery of the slipper cam plate 26, which holds the disc part 22b of the centre cam 22 between the slipper cam plate and the assist cam plate 24, is fixed to the cylindrical part 18a of the clutch inner 18.

A sub clutch spring 36 that presses the assist cam plate 24 towards the disc part 22b of the centre cam 22 is inserted between the assist cam plate 24 and the pressure plate 21, and is for example formed from a stack of coned disc springs.

The slipper cam plate 26 is arranged between the disc part 22b of the centre cam 22 and an annular set plate 37 fixed to the cylindrical part 18a of the clutch inner 18, and is fixed to the cylindrical part 18a. A clutch spring 38, which may be formed from a stack of coned disc springs, is provided between the spring retainer 33 (which is fixed to the main shaft 11) and the set plate 37. The clutch inner 18 is pressed by the clutch spring 38 so that the pressurizing plate part 18b is urged towards the pressure plate 21, that is, the side on which the driving friction plates 19 and the driven friction plates 20 are fitted and the multiple disc clutch 14 is connected by resilience produced by the clutch spring 38.

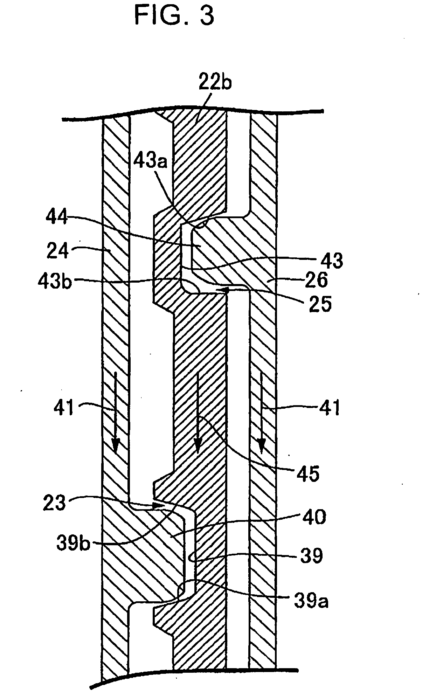

As shown in Fig. 3, in the assist cam mechanism 23, plural projections 40 which project from the assist cam plate 24 are inserted into plural concave portions 39 provided on one surface of the disc part 22b of the centre cam 22. When the clutch inner 18 rotates in a direction shown by an arrow 41 in Fig. 3 while motive power is transmitted from the primary driven gear 16 to the main shaft 11 via the multiple disc clutch 14 in a connected state, each first slanting contact face 39a, which is slanting and located in front in a rotational direction 41 toward the side of the assist cam plate 24, is formed on a forward face in the rotational direction 41 of each concave portion 39, and each second slanting contact face 39b, which is slanting and located behind in the rotational direction 41 toward the side of the assist camplate 24, is formed on a backward face in the rotational direction 41 of each concave portion 39.

When torque fluctuation on the side of acceleration occurs while the torque is transmitted between the primary driven gear 16 and the main shaft 11, each projection 40 of the assist cam plate 24 comes into contact with the first slanting contact face 39a of each concave portion 39 of the disc part 22b of the centre cam 22. A force tending to separate the assist cam plate 24 from the disc part 22b of the centre cam 22 acts on the assist cam plate 24 from the disc part 22b, pressure in a reverse direction by the sub clutch spring 33 that negates the pressure of the clutch spring 38 is damped, the pressure by the clutch spring 38 is completely enforced, and the compressive force of the driving friction plates 19 and the driven friction plates 20 is increased.

In the back torque limiter mechanism 25, plural projections 44 which project from the slipper cam plate 26 are inserted into plural concave portions 43 provided on the other surface of the disc part 22b of the centre cam 22. When torque fluctuation on the side of deceleration occurs while the multiple disc clutch 14 is connected, each third slanting contact face 43a, which is slanting and located behind in a rotational direction 45 toward the side of the slipper cam plate 26, is formed on a backward face in the rotational direction 45 of each concave portion 43 when a rotational direction of the centre cam 22 is the direction shown by an arrow 45, and each fourth slanting contact face 43b, which is slanting and located in front in the rotational direction 45 toward the side of the slipper cam plate 26, is formed on a forward face in the rotational direction 45 of each concave portion 43.

When torque fluctuation on the side of deceleration occurs while the torque is transmitted between the primary driven gear 16 and the main shaft 11, the third slanting contact face 43a of each concave portion 43 of the disc part 22b of the centre cam 22 comes into contact with each projection 44 of the slipper cam plate 26. A force tending to separate the slipper cam plate 26 from the disc part 22b of the centre cam 22 acts on the slipper cam plate 26 from the disc part 22b, the pressure of the clutch spring 38 is damped, and the compressive force of the driving friction plates 19 and the driven friction plates 20, 20 is reduced.

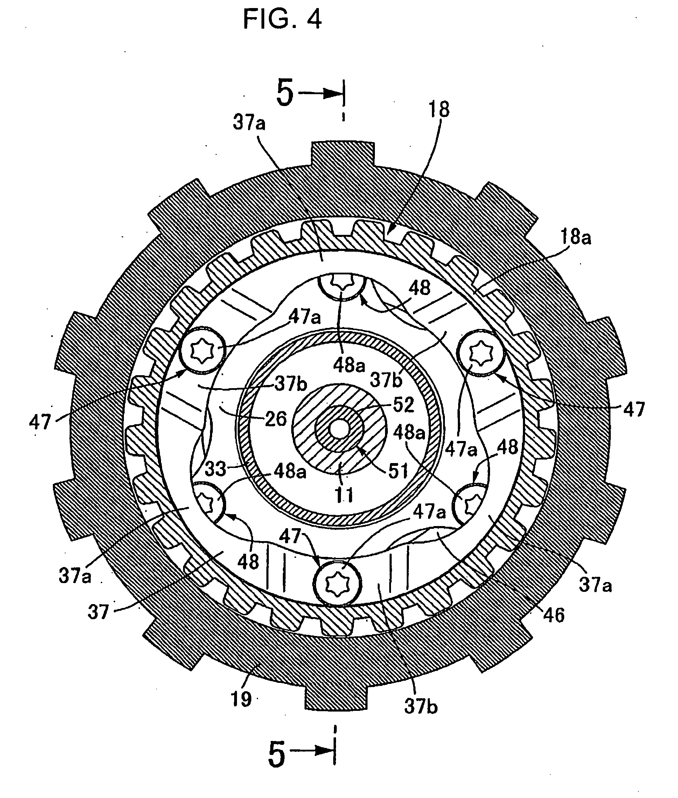

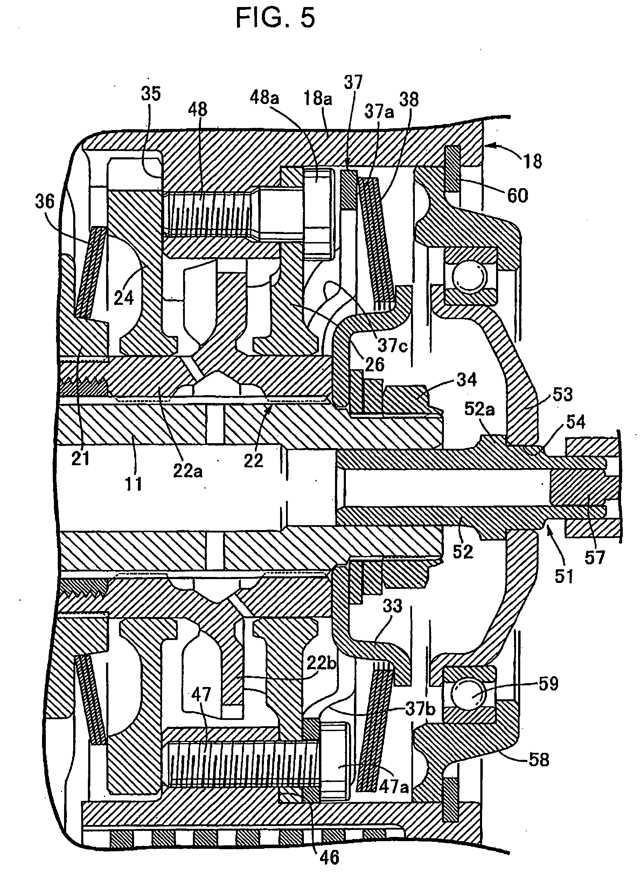

Also referring to Figs. 4 and 5, an annular mounting stage 46 facing the side of the slipper cam plate 26 is formed on the inner circumference of the cylindrical part 18a of the clutch inner 18, on the opposite side to the regulating stage 35. The periphery of the slipper cam plate 26 is in contact with and fixed to the mounting stage 46. A part of the set plate 37 is in contact with the slipper cam plate 26 in the axial direction, and in this embodiment, the set plate 37 is formed so that plural locations spaced around the peripheral direction of the set plate 37 are touched to the periphery of the slipper cam plate 26.

In addition, the set plate 37 is jointly fastened to the mounting stage 46 in the cylindrical part 18a of the clutch inner 18 together with the slipper cam plate 26 by plural bolts for joint fastening 47, and the slipper cam plate 26 is fastened to the mounting stage 46 by plural reamer bolts 48 in addition to the bolts for joint fastening 47.

There are three bolts for joint fastening 47 and three reamer bolts 48, and the bolts for joint fastening 47 and the reamer bolts 48 are arranged at equal intervals or alternately at an interval in a circumferential direction of the clutch inner 18. In this embodiment, the bolts for joint fastening 47 and the reamer bolts 48 are arranged at an equal interval in the circumferential direction.

Further, each reamer bolt 48 is arranged so that a part of each reamer bolt 48 projects radially inwardly from an inner circumference of the set plate 37 when each reamer bolt is viewed in an axial direction of the clutch inner 18, and narrow parts 37a whose width in the radial direction of the clutch inner 18 is smaller than a diameter of each extended head 47a of each bolt for joint fastening 47 are formed between the bolts for joint fastening 47 of the set plate 37.

The set plate 37 is separate from the slipper cam plate 26 between parts in which the set plate is fastened by the bolts for joint fastening 47, to avoid interference with the reamer bolts 48, though the set plate is in contact with the periphery of the slipper cam plate 26 in the part of the set plate where it is fastened by the bolts for joint fastening 47. Plural first housing concave portions 37b which open away from the slipper cam plate 26 and plural second housing concave portions 37c which open towards the slipper cam plate 26 are provided on the set plate 37, with the first and second housing concave portions alternately arranged in a circumferential direction of the set plate, such that the set plate 37 is formed in a wavy state in the circumferential direction.

In addition, each extended head 47a of each bolt for joint fastening 47 is housed in each first housing concave portion 37b so that each extended head is not protruded on the side of the clutch spring 38 from the set plate 37 and each extended head 48a of each reamer bolt 48 is housed in each second housing concave portion 37c. Each narrow part 37a forms a part of each second housing concave portion 37c.

The multiple disc clutch 14 is covered with an engine cover 50 with which the engine is provided. A clutch lifter 51, arranged coaxially with the clutch inner 18, is supported by the main shaft 11 and the engine cover 50 so that it can be moved in the axial direction, and in particular in the axial direction opposite to the direction in which the clutch inner 18 is pressed by the clutch spring 38.

The clutch lifter 51 is formed from a lifter pin 52 which is coaxial with the clutch inner 18, and a dished holding member 53 which is formed as a separate member from the lifter pin 52 and attached to an intermediate part of the lifter pin 52.

One end of the lifter pin 52 is slideably fitted to the engine cover 50 and the other end of the lifter pin 52 is slideably fitted to the main shaft 11. In addition, a mounting flange 52a projecting radially outwardly is formed at an intermediate part of the lifter pin 52. An insertion hole 54 into which the lifter pin 52 is inserted is provided at the centre of the holding member 53, and the holding member 53 is attached to the lifter pin 52 by fitting a circumferential edge of the insertion hole 54 to the mounting flange 52a from the outside in the axial direction.

An operating shaft 55 for switching the engagement/the disengagement of the multiple disc clutch 14 is turnably supported by the engine cover 50, and a lever 56 is provided on an end of the operating shaft 55 which projects from the engine cover 50. One end of a transmission shaft 57 which is displaced in the axial direction according to the turning of the operating shaft 55 is fitted to an inner end of the operating shaft 55, and the other end of the transmission shaft 57 is coaxially coupled to one end of the lifter pin 52 in the clutch lifter 51.

An annular lifter plate 58 that moves the clutch inner 18 in the direction opposite to the direction in which it is pressed by the clutch spring 38, according to the displacement in the axial direction of the clutch lifter 51, is held on the periphery of the clutch lifter 51 (that is, on the periphery of the holding member 53) via a clutch bearing 59.

In addition, a snap ring 60 which is fitted to and is in contact with the periphery of the lifter plate 58 in the direction pressed by the clutch spring 38 is installed on an inner circumference of one end of the cylindrical part 18a in the clutch inner 18.

The clutch spring 38 is arranged inside the clutch bearing 59 in the axial direction and radially outside of the nut 34, and the lifter plate 58 and the holding member 53 are arranged outside the clutch spring 38 in the axial direction of the main shaft 11.

Further, the clutch bearing 59 is arranged outside the nut 34 with a part of the clutch bearing overlapped with the nut 34 in a side view.

Next, to explain the action of this embodiment, the sub clutch spring 36 is provided among the clutch inner 18, the pressure plate 21 fixed to the main shaft 11 and the assist cam plate 24 contacting the regulating stage 35 of the clutch inner 18. As the fixing holder 30 that detachably fixes the pressure plate 21 to the periphery of the cylindrical boss 22a (with which the centre cam 22 fixed to the main shaft 11 is provided) is detachably attached to the boss 22a, the centre cam 22 and the pressure plate 21 can be prevented from being separated by the resilience of the sub clutch spring 36 in maintenance, the centre cam 22 and the pressure plate 21 can be sub-assembled into simple structure, and the ease of handling, the maintainability and the ease of assembly can be enhanced.

As the fixing holder 30 is screwed to the boss 22a with the fixing holder holding the pressure plate 21 between the fixing holder and the boss 22a, these members can be disassembled if necessary and the maintainability can be enhanced. In addition, the fitting groove 32 for fitting a turning tool may be provided on the outer end face of the fixing holder 30, the fixing holder 30 can be made axially compact without having an operating part for turning the fixing holder 30 projecting axially, and thus, the multiple disc clutch 14 can be made axially compact.

As the pressure plate 21 is fitted to the periphery of the boss 22a via splines, rotational displacement of the pressure plate 21 relative to the main shaft 11 and the centre cam 22 can be securely prevented.

Further, as the fixing holder 30 is integrally provided with the threaded shank 30a screwed to the boss 22a and the flange 30b projecting radially from the periphery of the boss 22a and linked to the outer end of the threaded shank 30a, and the pressure plate 21 is held between the stage 31 provided on the periphery of the boss 22a and the flange 30b, the centre cam 22 and the pressure plate 21 can be disassembled if necessary and the maintainability can be enhanced.

The clutch inner 18 is axially pressed by the clutch spring 38. The lifter plate 58 that moves the clutch inner 18 against the direction of urging of the clutch spring 38 according to the axial movement of the clutch lifter 51 is held via clutch bearing 59 by the periphery of the clutch lifter 51, which can be moved in the opposite direction to the direction in which the clutch inner 18 is urged by the clutch spring 38 and which is arranged coaxially with the clutch inner 18. The clutch lifter 51 is formed from the lifter pin 52, which is coaxial with the clutch inner 18, and the dished holding member 53, which is formed as a separate member from the lifter pin 52 and which is attached to the intermediate part of the lifter pin 52.

Therefore, when the size of the clutch bearing 59 is changed, only the shape of the holding member 53 needs to be changed; the lifter pin 52 can remain unchanged, and so the cost of the clutch lifter 51 can be reduced.

In addition, as the clutch spring 38 is located inside the clutch bearing 59 (which is provided between the holding member 53 and the lifter plate 58) in the axial direction, and is arranged outside the nut 34 (which is screwed to the main shaft 11 to fix the centre cam 22 to the main shaft 11), the clutch spring 38 is arranged effectively utilizing space around the nut 34 and the size of the multiple disc clutch 14 can be reduced.

As the snap ring 60 which is in contact with the periphery of the lifter plate 58 is installed on the inner circumference at one end of the cylindrical part 18a of the clutch inner 18, simple assembly is enabled even though the snap ring is a separate member from the clutch inner 18 and the lifter plate 58, and axial movement of the lifter plate 58 can be transmitted to the clutch inner 18 with a simple structure.

As the clutch spring 38 is arranged radially within the clutch inner 18, and the lifter plate 58 and the holding member 53 are arranged outside the clutch spring 38 in the axial direction of the main shaft 11, the clutch spring 38 can be covered and protected by the clutch inner 18, the lifter plate 58 and the holding member 53. Oil is prevented from being splashed on the clutch spring 38 and a drag (ie resistance to motion) of the clutch spring 38 can be prevented from being caused, or at least reduced.

As the clutch bearing 59 is arranged outside the nut 34 with a part of the clutch bearing overlapped with the nut 34 in a side view, it can contribute to the compactness in the axial direction of the multiple disc clutch 14.

As a part of the ring-shaped set plate 37 provided on the side of the clutch inner 18 so as to receive a load from the clutch spring 38 that presses the clutch inner 18 in the axial direction is in contact with the slipper cam plate 26 fixed to the clutch inner 18 in the axial direction so as to enable reducing frictional force for fitting the driving friction plates 19 and the driven friction plates 20, the area in which the set plate 37 is in contact can be easily extended, and strength for supporting the set plate 37 can be enhanced with a simple configuration in which an increase of the number of parts is avoided.

In addition, as the set plate 37 is jointly fastened to the clutch inner 18 together with the slipper cam plate 26 by the plural bolts for joint fastening 47, no dedicated bolts for fixing the set plate 37 are required, and the set plate 37 can be securely fixed on the side of the clutch inner 18 while avoiding an increase of the number of parts.

As the slipper cam plate 26 is fastened to the clutch inner 18 by the plural reamer bolts 48 in addition to the plural bolts for joint fastening 47, the slipper cam plate 26 can be firmly fastened to the clutch inner 18 in those parts which are fixed by the reamer bolts 48.

As the slipper cam plate 26 is fastened to the clutch inner 18 by the three reamer bolts 48 in addition to the three bolts for joint fastening 47, the slipper cam plate 26 and the set plate 37 can be fixed to the clutch inner 18 with the minimum number of bolts. Further, as the bolts for joint fastening 47 and the reamer bolts 48 are arranged at equal intervals around the circumferential direction of the clutch inner 18, the slipper cam plate 26 and the set plate 37 can be fixed to the clutch inner 18 stably with uniform force in the circumferential direction.

As a part of each reamer bolt 48 projects radially inwardly from the inner circumference of the set plate 37 when the part is viewed from the axial direction of the clutch inner 18, a situation in which each reamer bolt 48 is fastened can be easily checked in maintenance.

Each narrow part 37a, whose radial width is made smaller at least than the diameter of each extended head 47a of each joint fastening bolt 47, is formed in the set plate 37 between the bolts for joint fastening 47, and so distortion caused when each bolt for joint fastening 47 is fastened can be absorbed by the deformation of each narrow part 37a.

As the first housing concave portions 37b are provided on the set plate 37 and each extended head 47a of each bolt for joint fastening 47 is housed in each first housing concave portion 37b to prevent each extended head from projecting from the set plate 37 on the side of the clutch spring 38, interference between the clutch spring 38 and each bolt for joint fastening 47 is avoided, and a setting load can be stabilized.

Further, as each extended head 48a of each reamer bolt 48 is housed in each second housing concave portion 37c provided on the set plate 37, interference between each reamer bolt 48 and the set plate 37 can be avoided.

A preferred embodiment of the present invention has been described; however, the present invention is not limited to the embodiment and various changes in design without deviating from the present invention disclosed in the scope of the claims are allowed.

## Claims

1. A multiple disc clutch comprising:
a clutch outer (17) coupled to an Input member (16);
a plurality of driving friction plates (19) fitted to the clutch outer (17) so that they cannot rotate relative thereto;
a plurality of driven friction plates (20) arranged alternately with the driving friction plates (19);
a pressing member (18) which rotates together with an output shaft (11) and which is movable in an axial direction to compress the driving friction plates (19) and the driven friction plates (20);
a clutch spring (38) that axially presses the pressing member (18);
a clutch lifter (51) that can be moved in an opposite direction to a direction In which the pressing member (18) is pressed by the clutch spring (38) and which is arranged coaxially with the pressing member (18); and
a lifter plate (58) that is held by the periphery of the clutch lifter (51) via a clutch bearing (59) and which moves the pressing member (18) in the opposite direction to the direction in which the pressing member is pressed by the clutch spring (38) according to axial movement of the clutch lifter (51),
wherein the clutch lifter (51) is formed from:
a lifter pin (52) which is coaxial with the pressing member (18); and
a dished holding member (53) formed as a separate member from the lifter pin (52) and attached to an intermediate part of the lifter pin (52); and
wherein the clutch spring (38) is arranged axially inside the clutch bearing (59) which is provided between the holding member (53) and the lifter plate (58), and outside a nut (34) screwed to the output shaft (11) so as to fix an inner member (22) to the output shaft (11);
**characterized In that** the clutch bearing (59) is arranged outside the nut (34), with a part of the clutch bearing overlapped with the nut (34) in a side view.

2. The multiple disc clutch according to Claim 1, wherein a dislocation preventing member (60) is installed on the pressing member (18) and is in contact with the periphery of the lifter plate (58).

3. The multiple disc clutch according to Claim 1 or Claim 2, wherein:
the clutch spring (38) is arranged radially within the pressing member (18);
and
the lifter plate (58) and the holding member (53) are arranged outside the clutch spring (38) in the direction along an axis of the output shaft (11).

## Patentansprüche

1. Mehrscheibenkupplung, die Folgendes umfasst:
eine Kupplungsglocke (17), die an ein Antriebselement (16) gekoppelt ist,
mehrere antreibende Reibplatten (19), die an der Kupplungsglocke (17) angebracht sind, so dass sie sich im Verhältnis zu derselben nicht drehen können,
mehrere angetriebene Reibplatten (20), die abwechselnd mit den antreibenden Reibplatten (19) angeordnet sind,
ein Druckelement (18), das sich zusammen mit einer Abtriebswelle (11) dreht und das in einer axialen Richtung bewegt werden kann, um die antreibenden Reibplatten (19) und die angetriebenen Reibplatten (20) zusammenzudrücken,
eine Kupplungsfeder (38), die das Druckelement (18) in Axialrichtung drückt,
einen Kupplungsheber (51), der bewegt werden kann in einer Richtung, entgegengesetzt zu einer Richtung, in der das Druckelement (18) durch die Kupplungsfeder (38) gedrückt wird, und der koaxial mit dem Druckelement (18) angeordnet ist, und
eine Heberplatte (58), die über ein Kupplungslager (59) durch den Rand des Kupplungshebers (51) gehalten wird und die entsprechend einer axialen Bewegung des Kupplungshebers (51) das Druckelement (18) in der Richtung, entgegengesetzt zu der Richtung, in der das Druckelement durch die Kupplungsfeder (38) gedrückt wird, bewegt,
wobei der Kupplungsheber (51) von Folgendem gebildet wird:
einem Heberstift (52), der koaxial mit dem Druckelement (18) ist, und
einem einwärts gekrümmten Halteelement (53), das als ein von dem Heberstift (52) gesondertes Element geformt und an einem Zwischenteil des Heberstifts (52) befestigt ist, und
wobei die Kupplungsfeder (38) in Axialrichtung innerhalb des Kupplungslagers (59), das zwischen dem Halteelement (53) und der Heberplatte (58) bereitgestellt wird, und außerhalb einer Mutter (34), die an die Abtriebswelle (11) geschraubt ist, um so ein inneres Element (22) an der Abtriebswelle (11) zu befestigen, angeordnet ist,
**dadurch gekennzeichnet, dass** das Kupplungslager (59) außerhalb der Mutter (34) angeordnet ist, wobei ein Teil des Kupplungslagers in einer Seitenansicht mit der Mutter (34) überlappt ist.

2. Mehrscheibenkupplung nach Anspruch 1, wobei ein Verschiebungsverhinderungselement (60) an dem Druckelement (18) angebaut ist und sich in Berührung mit dem Rand der Heberplatte (58) befindet.

3. Mehrscheibenkupplung nach Anspruch 1 oder Anspruch 2, wobei:
die Kupplungsfeder (38) in Radialrichtung innerhalb des Druckelements (18) angeordnet ist und
die Heberplatte (58) und das Halteelement (53) außerhalb der Kupplungsfeder (38) in der Richtung entlang einer Achse der Abtriebswelle (11) angeordnet sind.

## Revendications

1. Embrayage à disques multiples, comprenant :
une enveloppe d'embrayage (17) couplée à un élément
d'entrée (16) ;
une pluralité de plateaux de friction menants (19)
ajustés à l'enveloppe d'embrayage (17) de sorte qu'ils ne puissent pas tourner par rapport à celle-ci ;
une pluralité de plateaux de friction menés (20)
aménagés en alternance avec les plateaux de friction menants (19) ;
un élément presseur (18) qui tourne conjointement avec
un arbre de sortie (11) et qui peut être déplacé dans la direction axiale pour presser les plateaux de friction menants (19) et les plateaux de friction menés (20) ;
un ressort d'embrayage (38) qui presse axialement
l'élément presseur (18) ;
une came d'embrayage (51) qui peut être déplacée dans
un sens opposé au sens dans lequel l'élément presseur (18) est pressé par le ressort d'embrayage (38) et qui est aménagée coaxialement avec l'élément presseur (18) ; et
une plaque de came (58) qui est maintenue par la
périphérie de la came d'embrayage (51) via un palier d'embrayage (59) et qui déplace l'élément presseur (18) dans le sens opposé au sens dans lequel l'élément presseur est pressé par le ressort d'embrayage (38) selon le mouvement axial de la came d'embrayage (51),
dans lequel la came d'embrayage (51) est formée des
éléments suivants :
une broche de came (52) qui est coaxiale avec
l'élément presseur (18) ; et
un élément de support en cuvette (53) formé comme un
élément séparé de la broche de came (52) et fixé à une partie intermédiaire de la broche de came (52) ; et
dans lequel le ressort d'embrayage (38) est aménagé
axialement à l'intérieur du palier d'embrayage (59), qui est prévu entre l'élément de support (53) et la plaque de came (58), et à l'extérieur d'un écrou (34) vissé sur l'arbre de sortie (11) de manière à fixer un élément interne (22) à l'arbre de sortie (11) ;
**caractérisé en ce que** le palier d'embrayage (59) est
aménagé à l'extérieur de l'écrou (34), une partie du palier d'embrayage étant chevauchée par l'écrou (34) en vue latérale.

2. Embrayage à disques multiples selon la revendication 1, dans lequel un élément (60) empêchant la dislocation est installé sur l'élément presseur (18) et est en contact avec la périphérie de la plaque de came (58).

3. Embrayage à disques multiples selon la revendication 1 ou la revendication 2, dans lequel :
le ressort d'embrayage (38) est aménagé radialement à
l'intérieur de l'élément presseur (18) ; et
la plaque de came (58) et l'élément de support (53)
sont aménagés à l'extérieur du ressort d'embrayage (38) dans le sens le long d'un axe de l'arbre de sortie (11).
